# EUROPEAN PATENT APPLICATION

(11) **EP 2 375 183 A1**
(43) Date of publication of application: **12.10.2011**
(21) Application number: 11161794.0
(22) Date of filing: 08.04.2011
(51) Int. Cl.: F24H 1/43, F24H 1/52, F28D 7/02, F28F 1/02, F28F 1/16, F24H 8/00

(54) **HEAT EXCHANGER FOR HEATING AT LEAST TWO FLUIDS AND METHOD OF PRODUCING SUCH A HEATER**

(30) Priority: 08.04.2010 IT MI20100590
(71) Applicant: Riello S.p.A., Legnago (IT)
(72) Inventor: Casiraghi, Stefano, 23875 Osnago (IT)
(74) Representative: Jorio, Paolo

(57) **Abstract**

A heat exchanger (1) for heating two liquids has a hollow elongated member (3) which is coiled about an axis (A) into a number of adjacent turns (13), and has a tube (17) having an outer wall (24), and at least one partition (18) located inside the tube (17) and formed integral with the outer wall (24) of the tube (17), so as to define, inside the tube (17), two separate conduits (22, 23) for conducting a first and second liquid respectively along a hot region of the heat exchanger (1).

## Description

The present invention relates to a heat exchanger for heating two liquids.

More specifically, the present invention relates to a condensation heat exchanger designed for assembly in a condensation boiler for producing hot water for heating and domestic use.

One type of condensation heat exchanger that has proved particularly efficient comprises a hollow elongated member coiled about a given axis to form a number of adjacent turns, and a gap of given size between the adjacent turns; and a liquid, normally water, flows along the coiled hollow elongated member, which is housed in a casing into which combustion fumes, or, more generally speaking, hot gas containing steam, are conducted.

The heat exchanger referred to above defines a hot-gas path extending between the adjacent turns to improve heat exchange between the hot gas and the liquid; for which purpose, the size and the cross section shape of the hollow elongated member, and the size of the gap between the adjacent turns are important design parameters.

Heat exchangers of the above type are known, and are commonly used in condensation boilers, as described, for example, in EP 1,627,190 B1; EP 1,600,708 A1; EP 1,750,070 A1; EP 1,750,069 A1; and EP 1,752,718 A1.

EP 1,627,190 B1 describes a heat exchanger manufacturing method comprising the steps of extruding a straight hollow elongated member from aluminium; coiling the hollow elongated member about a given axis to form a number of adjacent turns; and inserting spacers between the adjacent turns. The heat exchanger in this case, however, is unsuitable for producing domestic hot water, on account of the material from which the hollow elongated member is made failing to conform with health regulations. Nor can it heat two separate liquids, such as heating and domestic water, so the condensation boiler needs an additional liquid-liquid heat exchanger, thus increasing manufacturing cost and reducing thermal efficiency.

To eliminate this drawback, EP 1,281,919 A2 employs a hollow elongated member comprising two tubes of different sizes, one inside the other; and domestic water flows along the inner tube, which is obviously made of material conforming with health regulations, and heating water flows along the outer tube. This solution, however, has not proved particularly satisfactory on account of the poor heat exchange between the combustion fumes and the liquid flow along the inner tube.

Other known solutions provide for two coiled hollow elongated members inside the casing, one for conducting heating water, and the other for conducting domestic water.

In solutions of this sort, accommodating two coiled hollow elongated members inside the casing is fairly complicated, and satisfactory heat exchange performance is not always guaranteed.

One object of the present invention is to provide a heat exchanger for heating two liquids, which is cheap and easy to produce.

Another object of the present invention is to provide a heat exchanger for heating two liquids, which provides for a high degree of efficiency in terms of heat exchange.

According to the present invention, there is provided a heat exchanger for heating at least two liquids, the heat exchanger comprising a casing for conducting combustion fumes; and a hollow elongated member, which is housed inside the casing, is coiled about an axis into a number of adjacent turns, and comprises a metal profile comprising a tube having an outer wall, and at least one partition located inside the tube and formed integral with the outer wall of the tube, so as to define, inside the tube, at least a first and second conduit for conducting a first and second liquid respectively along a hot region of the heat exchanger. The partition and the outer wall of the tube being seamless, the present invention provides for heating at least two liquids with a good degree of thermal exchange using only one hollow elongated member.

Another object of the present invention is to provide a simple, low-cost method of producing a heat exchanger for heating two liquids.

According to the present invention, there is provided a method of producing a heat exchanger for heating at least two liquids, the heat exchanger comprising a casing for conducting combustion fumes; and a hollow elongated member, which is housed inside the casing, is coiled about an axis into a number of adjacent turns, and comprises a metal profile comprising a tube having an outer wall, and at least one partition located inside the tube and integral with the outer wall, so as to define, inside the tube, at least a first and second conduit for conducting respective liquids; the method comprising the steps of extruding the metal profile; said partition being extruded simultaneously with the outer wall of the tube.

A number of non-limiting embodiments of the present invention will be described by way of example with reference to the accompanying drawings, in which :
Figure 1 shows a partly exploded view in perspective, with parts removed for clarity, of the heat exchanger according to the present invention;
Figure 2 shows a larger-scale view in perspective, with parts removed for clarity, of a hollow elongated member of the Figure 1 heat exchanger;
Figure 3 shows a larger-scale view in perspective, with parts removed for clarity, of a variation of the hollow elongated member in Figure 2;
Figure 4 shows a larger-scale, partly sectioned side view, with parts removed for clarity, of the Figure 3 hollow elongated member wound into a coil;
Figure 5 shows a larger-scale view in perspective, with parts removed for clarity, of a variation of the hollow elongated member in Figure 2;
Figure 6 shows a larger-scale view in perspective, with parts removed for clarity, of a variation of the hollow elongated member in Figure 5;
Figure 7 shows a larger-scale, partly sectioned side view, with parts removed for clarity, of the Figure 6 hollow elongated member wound into a coil.

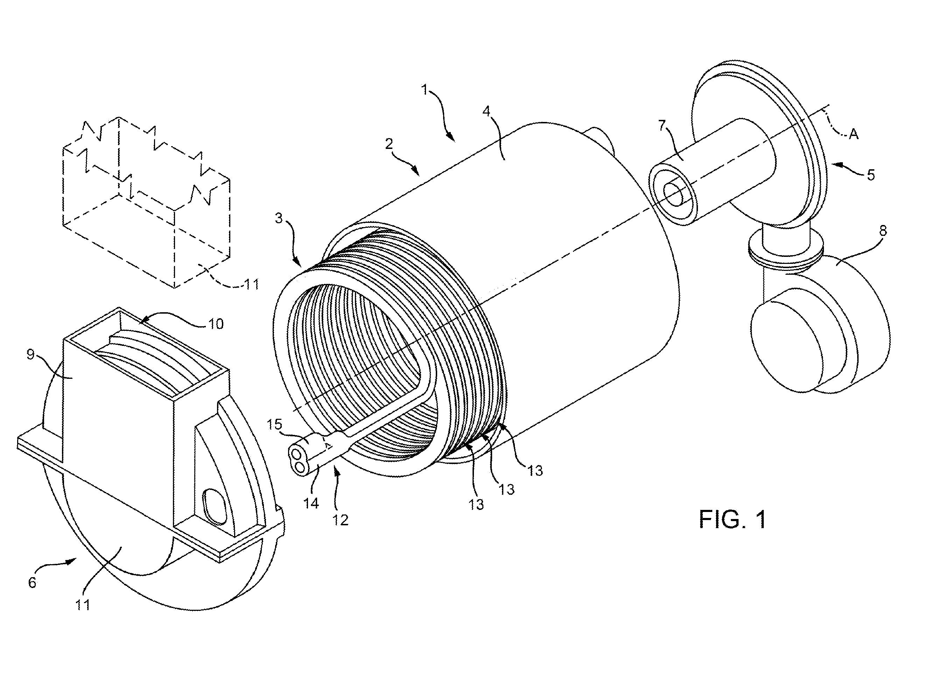

Number 1 in Figure 1 indicates as a whole a heat exchanger, which, in the example shown, is a condensation heat exchanger of a gas boiler for producing hot water for heating and domestic use. In the example shown, heat exchanger 1 comprises a cylindrical casing 2; and a hollow elongated member 3 coiled about an axis A and housed inside casing 2.

Casing 2 comprises a cylindrical wall 4 made of metal, e.g. aluminium, or polymer material; and two end walls 5 and 6 fitted to cylindrical wall 4 to form a combustion fume chamber. In the example shown, end wall 5 is fitted with a cylindrical burner 7 housed, in use, inside the combustion fume chamber; and a ventilator 8 for feeding combustion air to burner 7. And end wall 6 comprises a manifold 9 with an outlet 10 connectable to a flue 11.

Hollow elongated member 3 comprises two end connectors 12 (only one shown in Figure 1) for connecting it to a domestic water circuit and a heating water circuit, which are not shown in the drawings, and which extend partly inside the hydraulic assembly, partly along hollow elongated member 3, and partly along conduits not shown in the drawings.

The coiled hollow elongated member 3 is sized and located to form a gap between itself and cylindrical outer wall 4, and forms a number of turns 13 spaced apart to form a gap allowing combustion fumes to flow between adjacent turns 13. To promote combustion fume flow between adjacent turns 13, plugs and spacers (not shown) may be inserted to define a compulsory combustion fume path inside casing 2, as described for example in Patent EP 1,627,190 B1.

Each connector 12 forks into two separate connectors 14 and 15 _{:} connector 14 for heating water, and connector 15 for domestic water.

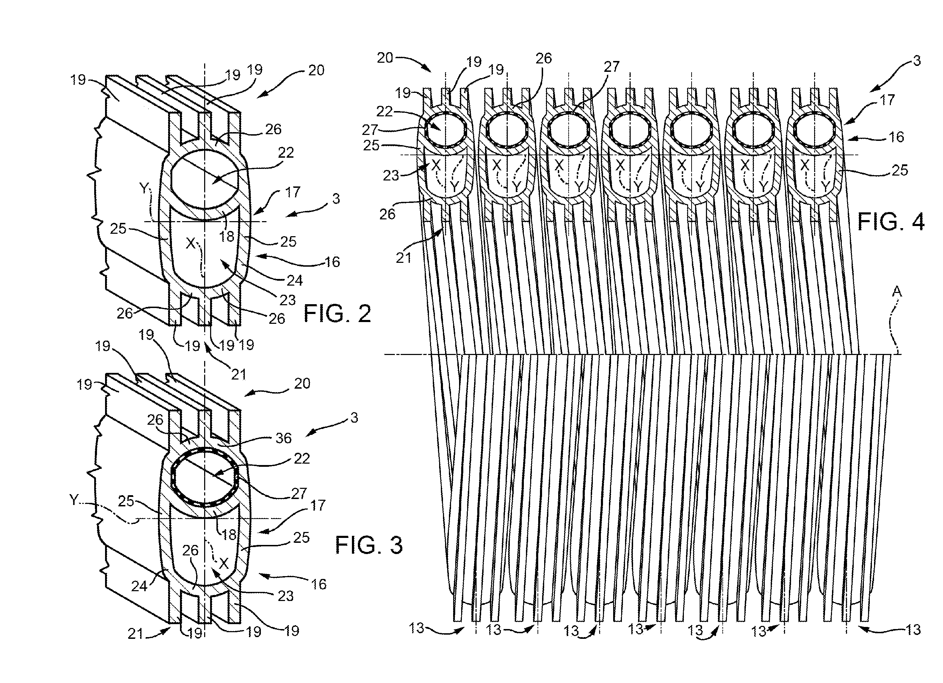

As shown in Figure 2, hollow elongated member 3 comprises a metal profile 16, in turn comprising a tube 17; a partition 18 inside tube 17; and preferably a number of fins 19 parallel to and on the outside of tube 17.

In the example shown, tube 17 has a preferably elliptical or oval cross section, a major axis X, and a minor axis Y. And fins 19, which are six in number in the example shown, are divided into two groups 20 and 21 located on opposite sides of axis Y and each comprising three fins 19.

The material from which metal profile 16 is made, and the thickness of tube 17 and fins 19 are selected so that the coiled hollow elongated member 3 is self-supporting. Moreover, the physical and mechanical characteristics of the material from which metal profile 16 is made are such as to ensure a high coefficient of thermal exchange, good structural rigidity, easy working in terms of permanent deformation, good resistance to acid corrosion (combustion fume condensation), and reasonable cost.

Given the mechanical characteristics of the material from which it is made, metal profile 16 is extruded to form tube 17, partition 18 and fins 19 simultaneously.

Partition 18 defines inside tube 17 a conduit 22 for domestic water, and a conduit 23 for heating water. In the Figure 2 example, the domestic water conduit 22 is smaller in cross section than the heating water conduit 23.

Tube 17 has an annular outer wall 24 integral with partition 18, and which, in the example shown, has two opposite portions 25 connected by partition 18 and with no fins 19, and two portions 26 smaller than portions 25.

In the Figure 2 embodiment, hollow elongated member 3 is made of one material suitable for contact with domestic water.

In the preferred embodiment shown in Figure 3, hollow elongated member 3 comprises metal profile 16 as in Figure 2, and a liner 27 lining domestic water conduit 22.

In the Figure 3 embodiment, liner 27 is made of material suitable for contact with domestic water, and metal profile 16 is made of extrudable, heat-resistant, relatively low-cost material resistant to acids such as combustion fume condensation.

Hollow elongated member 3 is preferably made straight, and then coiled about axis A, with minor axis Y substantially parallel to the coil axis A, as shown in Figure 4, so that group 20 of fins 19 and conduit 22 are located outwards of the coil, and group 21 of fins 19 and conduit 23 are located inwards of the coil. Alternatively, metal profile 16 is coiled, and liner 27 applied later.

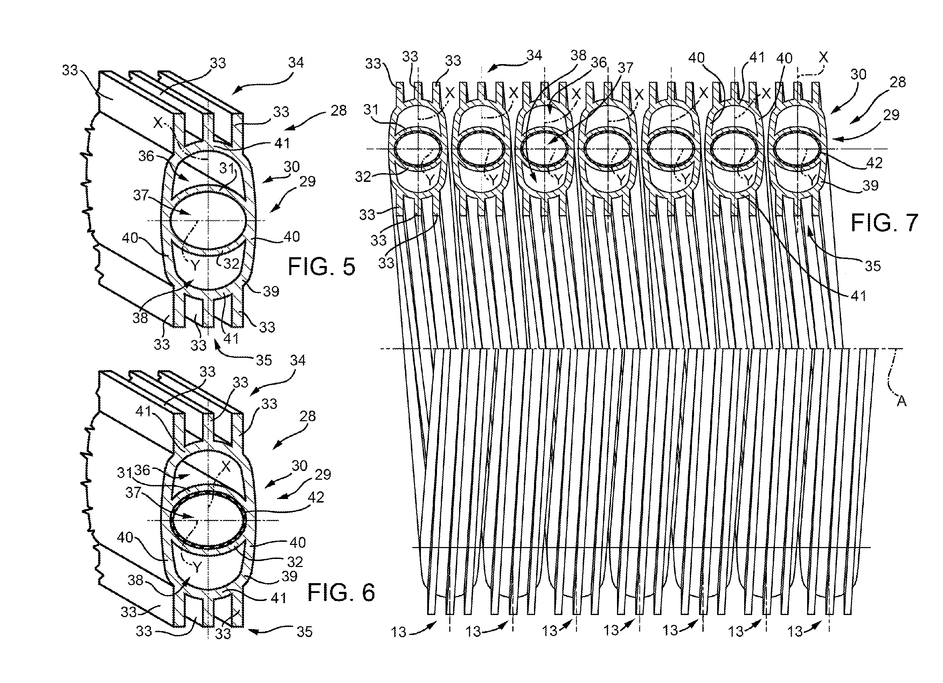

Figure 5 shows a hollow elongated member 28, which comprises a metal profile 29 comprising a tube 30; two partitions 31, 32 inside tube 30; and preferably a number of fins 33 parallel to and on the outside of tube 30.

In the example shown, tube 30 has a preferably elliptical or oval cross section, a major axis X, and a minor axis Y. And fins 33, which are six in number in the example shown, are divided into two groups 34 and 35 located on opposite sides of axis Y and each comprising three fins 33.

Like metal profile 16, the material and thickness of tube 30, partitions 31, 32, and fins 33 are selected to impart a high degree of rigidity to metal profile 29, so that the coiled hollow elongated member 28 is self-supporting.

Given the mechanical characteristics of the material from which it is made, metal profile 29 is extruded to form tube 30, partitions 31, 32, and fins 33 simultaneously.

Partitions 31, 32 define inside tube 30 three conduits 36, 37, 38, at least one of which is for domestic water. In the example shown, the central conduit 37 is for domestic water; conduits 36 and 38 are for conducting heating water, and communicate with each other at connectors 12 (Figure 1); and the domestic water conduit 37 has a cross section smaller than the total cross section of heating water conduits 36 and 38.

Tube 30 has an annular outer wall 39 integral with partitions 31 and 32, and which, in the example shown, has two opposite portions 40 connected by partitions 31, 32 and with no fins 33, and two portions 41 smaller than portions 40. In the Figure 5 embodiment, hollow elongated member 28 is made of one material suitable for contact with domestic water.

In the preferred embodiment shown in Figure 6, hollow elongated member 28 comprises metal profile 29 as in Figure 5, and a liner 42 lining domestic water conduit 37.

In the Figure 6 embodiment, liner 42 is made of material suitable for contact with domestic water, and metal profile 29 is made of extrudable, heat-resistant, relatively low-cost material resistant to acids such as combustion fume condensation.

A first method of forming liner 27/42 comprises inserting inside conduit 22/37 of metal profile 16/29 an auxiliary tube (not shown) made of a second material suitable for contact with domestic water; coiling metal profile 16/29 and the auxiliary tube; and then deforming the auxiliary tube into contact with the wall of conduit 22/37, so it adheres to the inner face of conduit 22/37. The auxiliary tube is preferably deformed using a relatively low-pressure hydroforming process, and by injecting pressurized liquid into tube 17/30. Outer wall 24/39 of tube 17/30 is roughly four times as thick as the auxiliary tube, which is longer than or the same length as tube 17/30.

A second method of producing hollow elongated member 3/28 comprises simultaneously extruding metal profile 16/29 and liner 27/42; in which case, it is the whole of hollow elongated member 3/28 which is coiled.

To form liner 27/42 using the above methods, the second material, i.e. from which liner 27/42 is made, is preferably copper or copper alloy, which are good heat conductors, easy to work, and suitable for contact with domestic water.

A third method of producing hollow elongated member 3/28 comprises forming liner 27/42 from a polymer, e.g. PE-RT, C-PVC, PEX-c or various types of PEX-a or PEX-b, which may be applied, e.g. sprayed on, in liquid form using a pipe with nozzles, or in the form of a solution fed into conduit 22/37 of hollow elongated member 3/28 so as to adhere to the inner face of conduit 22/37. The above methods of depositing liner 27/42 are preferably performed after hollow elongated member 3/28 is coiled.

The present invention has numerous advantages, foremost of which are the simple design of the hollow elongated member, which can thus be accommodated easily inside the combustion fume casing, and the continuity of the structure and material of the tube and partition/s, which provides for effective heat exchange between the combustion fumes and both liquids.

Clearly, changes may be made to the method and heat exchanger as described herein without, however, departing from the scope of the accompanying Claims.

For example, the fins may be omitted, or may be arranged differently or in different numbers from those described and shown in the drawings.

Also, the present invention also applies to applications in which the hollow elongated member conducts more than two separate liquids.

## Claims

1. A heat exchanger for heating at least two liquids, the heat exchanger (1) comprising a casing (2) for conducting combustion fumes; and a hollow elongated member (3; 28) which is housed inside the casing (2), is coiled about an axis (A) into a number of adjacent turns (13), and comprises a metal profile (16; 29) comprising a tube (17; 30) having an outer wall (24; 39), and at least one partition (18; 31, 32) located inside the tube (17; 30) and formed integral with the outer wall (24; 39) of the tube (17; 30), so as to define, inside the tube (17; 30), at least a first and second conduit (22, 23; 36, 37, 38) for conducting a first and second liquid respectively along a hot region of the heat exchanger (1).

2. A heat exchanger as claimed in Claim 1, wherein the tube (17; 30) has an oval or elliptical cross section with a major axis (X) and a minor axis (Y); the outer wall (24; 39) comprising two first portions (25; 40) on opposite sides of the major axis (X), and two second portions (26; 41) on opposite sides of the minor axis (Y); the partition (18; 31, 32) connecting the two first portions (25; 40).

3. A heat exchanger as claimed in Claim 2, wherein the minor axis (Y) is substantially parallel to the axis (A) when the hollow elongated member (3; 28) is coiled about the axis (A).

4. A heat exchanger as claimed in Claim 2 or 3, wherein the metal profile (16; 29) comprises longitudinal fins (19; 33) preferably divided into two groups (20, 21; 34, 35) extending respectively from the second portions (26; 41).

5. A heat exchanger as claimed in any one of the foregoing Claims, wherein the flow section of the first conduit (22) is smaller than the flow section of the second conduit (23).

6. A heat exchanger as claimed in any one of the foregoing Claims, wherein the first conduit (22) is located on the outside of the coil, and the second conduit (23) is located on the inside of the coil.

7. A heat exchanger as claimed in any one of Claims 1 to 3, wherein the metal profile (29) comprises a first and second partition (31, 32), so as to form a first, second, and third conduit (36, 37, 38) inside the tube (30).

8. A heat exchanger as claimed in any one of the foregoing Claims, wherein the metal profile (16; 29) is formed by extrusion.

9. A heat exchanger as claimed in any one of the foregoing Claims, wherein the material of the metal profile (16; 29) is chosen from materials suitable for contact with domestic water.

10. A heat exchanger as claimed in any one of the foregoing Claims, wherein the hollow elongated member (3; 28) comprises a liner (27; 42) applied to at least the first or second conduit (22, 23; 36, 37, 38) of the metal profile (16; 29); the liner (27; 42) being made of a material chosen from materials suitable for contact with domestic water.

11. A method of producing a heat exchanger for heating at least two liquids, the heat exchanger (1) comprising a casing (2) for conducting combustion fumes; and a hollow elongated member (3; 28) which is housed inside the casing (2), is coiled about an axis (A) into a number of adjacent turns (13), and comprises a metal profile (16; 29) comprising a tube (17; 30) having an outer wall (24; 39), and at least one partition (18; 31, 32) located inside the tube (17; 30) and integral with the outer wall (24; 39), so as to define, inside the tube (17; 30), at least a first and second conduit (22, 23; 36, 37, 38) for conducting respective liquids; the method comprising the steps of extruding the metal profile (16; 29); said partition (18; 31, 32) being extruded simultaneously with the outer wall (24; 39).

12. A method as claimed in Claim 11, wherein the metal profile (29) comprises a first and second partition (31, 32) extruded simultaneously with the outer wall (39), so as to form a first, second, and third conduit (36, 37, 38) inside the tube (30).

13. A method as claimed in Claim 11 or 12, wherein the material of the metal profile (16; 29) is chosen from materials suitable for contact with domestic water.

14. A method as claimed in any one of Claims 11 to 13, and comprising the step of lining at least the first or second conduit (22, 23; 36, 37, 38) with a material chosen from materials suitable for contact with domestic water, so as to form a liner (27; 42).

15. A method as claimed in Claim 14, wherein the liner (27; 42) is formed by hydroforming a further tube to deform it into contact with the tube (17; 30) inside the first or second conduit (22, 23; 36, 37, 38).

16. A method as claimed in Claim 14, wherein the liner (27; 42) is co-extruded with the metal profile (16; 29).

17. A method as claimed in Claim 14, wherein the liner (27; 42) is applied in liquid form.
